# EUROPÄISCHE PATENTSCHRIFT

(11) **EP 1 116 630 B1**
(45) Veröffentlichungstag und Bekanntmachung des Hinweises auf die Patenterteilung: **23.03.2005**
(21) Anmeldenummer: 00127039.6
(22) Anmeldetag: 09.12.2000
(51) Int. Cl.: B60R 16/02, H04B 1/20, H04L 12/28

(54) **Audio- und/oder Videosystem, insbesondere für Kraftfahrzeuge oder Heimanwendungen**
Audio- and/or Videosystem, specially for vehicles or home applications
Système vidéo ou audio, en particulier pour véhicules ou bien des applications domestiques

(30) Priorität: 24.12.1999 DE 19963155
(43) Veröffentlichungstag der Anmeldung: 18.07.2001
(73) Patentinhaber: Siemens Aktiengesellschaft, 80333 München (DE)
(72) Erfinder: Knobl, Karl-Heinz, 35444 Biebertal (OT Rodheim-Bieber) (DE)

(56) Entgegenhaltungen:
- EP-A- 0 560 593
- EP-A- 0 843 419
- DE-A- 19 651 308
- US-A- 5 574 514

## Beschreibung

Die Erfindung betrifft ein Audio- und/oder Videosystem mit mehreren verschiedenartigen Audio- und/oder Videogeräten, insbesondere für Kraftfahrzeuge oder für Heimanwendungen.

Ein gattungsgemäßes Audio- und/oder Videosystem ist aus der DE 19651308 A1 bekannt.

In Kraftfahrzeugen sind bereits heute unterschiedliche Audiogeräte und vereinzelt auch Videogeräte im Einsatz. Häufig handelt es sich dabei um Einzelgeräte, die nicht miteinander verbunden sind und daher separat bedient werden. Teilweise sind die Geräte zwar miteinander verbunden, jedoch können in der Regel nur bestimmte Geräte eines bestimmten Herstellers miteinander verbunden werden, so daß der Anwender bei der Erweiterung des Systems sehr stark eingeschränkt ist. Zukünftig werden in Kraftfahrzeugen mehr Audio- und/oder Videogeräte (A/V-Geräte) zum Einsatz kommen. Neben den bereits heute in Kraftfahrzeugen vielfach anzutreffenden Rundfunkempfängern mit Kassetten-Abspielgeräten und CD-Spielern können dies beispielsweise DVD-Geräte (DVD: Digital Versatile Disc), DAB-Empfänger (DAB: Digital Audio Broadcasting) oder TV-Tuner sein. Zudem kann die Zahl der Ausgabemedien durch Kopfhöreranschlüsse an den einzelnen Sitzplätzen oder auch mehrere Displays deutlich erhöht werden. Mit der Zunahme der Gerätetypen in Kraftfahrzeug werden die Probleme der Bedienung dieser Geräte jedoch größer und es stellt sich vermehrt die Frage der Kompatibilität. Beispielsweise können Radioprogramme über einen herkömmlichen analogen Rundfunkempfänger oder über einen digitalen DAB-Empfänger empfangen werden. Der Benutzer muß daher entscheiden, aus welcher Quelle er das gewünschte Audio- und/oder Videoangebot (A/V-Angebot) beziehen will und über die entsprechende Bedienoberfläche das Angebot auswählen.

Aus der WO99/35009 ist ein Kraftfahrzeug-Computersystem mit einem Audio-Unterhaltungssystem bekannt. Das Computersystem stellt einen Audiomanager API (Application Program Interface) zur Verfügung, wodurch das System in der Lage ist, die verschiedenen Audioquellen zu steuern, ohne daß die Hardware und Implementierungsdetails im einzelnen bekannt sein müssen. Das Computersystem arbeitet mit einem offenen Betriebssystem, insbesondere Windows CE.

Aus der EP 0 932 132 A2 ist ein Navigationssystem für Kraftfahrzeuge bekannt, das über eine Schnittstelle mit Multimediaanwendungen verknüpft ist. Bei der Schnittstelle handelt es sich ebenfalls um eine API. Um eine von der speziellen Plattform des eingesetzten Systems unabhängige Verbindung der Multimediaanwendung mit dem Navigationssystem zu erreichen, werden entsprechend geeignete und an sich bekannte Programmiersprachen, wie insbesondere Java, eingesetzt.

Aufgabe der Erfindung ist es, ein Audio- und/oder Videosystem (A/V-System) anzugeben, das einfach bedienbar ist und es dem Benutzer auf einfache Weise erlaubt, die Informations- und/oder Unterhaltungsangebote der verschiedenartigen A/V-Geräte zu nutzen.

Die Aufgabe wird gelöst durch ein Audio- und/oder Videosystem mit
- einem lokalen Netzwerk, das ein Datennetzwerk und einen Kontrollbus sowie Knoten zur Anbindung von Audio- und/oder Videogeräten beinhaltet,
- mehreren verschiedenartigen Audio- und/oder Videogeräten, die zur Übermittlung von Informationen hinsichtlich der von Ihnen bereitgehaltenen Audio- und/oder Videoangebote über das lokale Netzwerk ausgebildet sind,
- mindestens einer akustischen und/oder optischen Ausgabeeinheit für Audio- und/oder Videosignale,
- einer Steuereinheit mit einem Steuerprogramm und einem Speicher, in dem die Informationen hinsichtlich der von den Audio- und/oder Videogeräten bereitgehaltenen Audio- und/oder Videoangebote, die von den Geräten an die Steuereinheit übermittelt wurden, abgelegt sind,
- einer mit der Steuereinheit verbundenen Bedieneinheit und
- einer optischen Ausgabeeinheit (16, 17), auf der die Informationen hinsichtlich der bereitgehaltenen Audio- und/oder Videoangebote geräteunabhängig und in Klassen eingeteilt angezeigt werden.

Bei dem lokalen Netzwerk handelt es sich um ein solches, das innerhalb eines Kraftfahrzeuges oder einer Wohnung vorhanden ist. Das Netzwerk enthält die Komponenten Datennetzwerk und Kontrollbus. Weiterhin weist das Netzwerk Knoten auf, über die die Ankopplung der A/V-Geräte erfolgt. Das Netzwerk kann vorteilhafterweise als ringförmiges Netz, insbesondere als ringförmiges optisches Netz, realisiert sein. Besonders bevorzugt wird dabei ein an sich bekanntes optisches Netz nach den Standards D2B optical (D2B: Domestic Digital Bus) oder insbesondere MOST (Media Oriented Systems Transport). Die wesentlichen Merkmale der MOST-Technologie sind zunächst eine optische Datenübertragung über Kunststoff-Lichtwellenleiter in einer Ring-Topologie mit einer hohen Bandbreite von gegenwärtig 22,5 Mbit/s. Es werden sowohl Steuerkommandos als auch Statusinformationen übertragen. Weiterhin ist sowohl die Übertragung von Datenströmen, beispielsweise für Audio- und Videoanwendungen, als auch von Datenpaketen für Grafik oder Navigation möglich.

Bei den zum Einsatz kommenden A/V-Geräten kann es sich, neben den in Kraftfahrzeugen weit verbreiteten Rundfunkempfängern, Kassetten-Abspielgeräten und CD-Abspielgeräten bzw. CD-Wechslern, insbesondere um einen TV-Tuner, oder ein DVD- oder DAB-Gerät handeln. Erfindungsgemäß ist vorgesehen, daß die Geräte zur Übermittlung von Informationen hinsichtlich der von ihnen bereitgehaltenen A/V-Angebote über das lokale ringförmige Netzwerk ausgebildet sind. Im Falle eines Rundfunkempfängers handelt es sich dabei beispielsweise um die Namen der empfangbaren Rundfunkstationen sowie um Informationen zu den von den jeweiligen Rundfunkstationen übermittelten Angebote, wie beispielsweise Nachrichten, Sportmeldungen, Musik, Verkehrsmeldungen usw. Diese Informationen werden bereits von heutigen Rundfunkstationen im RDS-Telegramm übermittelt. Im Falle eines CD-Abspielgerätes können beispielsweise die Informationen bezüglich der Musiktitel einer eingelegten Audio-CD übermittelt werden.

Das A/V-System weist mindestens eine akustische und/oder optische Ausgabeeinheit auf. Vorzugsweise sind mehrere Ausgabeeinheiten vorgesehen. Neben den im Fahrzeug installierten Lautsprechern kann es sich dabei insbesondere um Kopfhörer an den einzelnen Sitzpositionen im Kraftfahrzeug handeln. Somit kann jeder Mitfahrer sein spezielles Audioprogramm empfangen. Darüber hinaus können mehrere Displays im Kraftfahrzeug vorgesehen sein, so beispielsweise für den Beifahrer und für die Rücksitzpassagiere. In Verbindung mit den Kopfhörern können damit auch verschiedene Videoangebote von den Mitfahrern genutzt werden.

Zentraler Bestandteil des A/V-Systems ist eine Steuereinheit mit einem Steuerprogramm und einem Speicher, in dem die Informationen hinsichtlich der von den A/V-Geräten bereitgehaltenen A/V-Angebote, die von den Geräten an die Steuereinheit übermittelt wurden, abgelegt sind. Mit der Steuereinheit ist mindestens eine Bedieneinheit für das System verbunden. Weiterhin ist mit der Steuereinheit eine optische Ausgabeeinheit verbunden. Bei dieser optischen Ausgabeeinheit kann es sich um eines der oben bereits erwähnten Displays handeln, über die auch die Videoangebote ausgegeben werden können. Es kann sich jedoch auch um eine separate optische Ausgabeeinheit handeln, die nur zur Darstellung der für die Bedienung des Systems benötigten Informationen ausgelegt ist. Auf dieser optischen Ausgabeeinheit werden erfindungsgemäß die Informationen hinsichtlich der bereitgehaltenen A/V-Angebote geräteunabhängig und in Klassen eingeteilt angezeigt. Durch die geräteunabhängige Wiedergabe entfällt für den Benutzer die Notwendigkeit, Gerät für Gerät die A/V-Angebote durchzusehen und das Gewünschte schließlich auszuwählen. Der Benutzer bekommt vielmehr eine Komplettübersicht über die Angebote, wobei über die Klasseneinteilung eine übersichtliche Darstellungsweise erzielt wird. Die Information hinsichtlich der Klassenzugehörigkeit eines A/V-Angebotes kann direkt von den A/V-Geräten zu der Steuereinheit übermittelt werden. In der Regel wird die von den A/V-Geräten übermittelte Information zu dem bereitgehaltenen A/V-Angebot in der Steuereinheit über ein geeignetes Computerprogramm jedoch noch aufbereitet werden. Beispielsweise kann von einem Rundfunkempfänger übermittelt werden, daß er einen bestimmten Sender bereithält, der Verkehrsinformationen übermittelt. Verkehrsinformationen können aber zusammen mit anderen Informationsangeboten wie beispielsweise Nachrichten in eine Klasse "Meldungen" eingeteilt werden. Eine solche Zuordnung kann in der Steuereinrichtung erfolgen.

Darüber hinaus können von den Geräten zu einem einzigen Angebot auch mehrere Informationen zu dem Inhalt des Angebotes übermittelt werden. Beispielsweise kann eine Rundfunkstation sowohl als Lieferant von Verkehrsmeldungen, Nachrichten und Musik gekennzeichnet sein. Dies bedeutet, daß ein einzelnes Angebot in verschiedenen Klassen vertreten sein kann. Auch eine solche Aufbereitung der übermittelten Informationen wird von der Steuereinheit vorgenommen.

Besonders bevorzugt wird eine Ausgabeform bei der jede Klasse mindestens eine Unterklasse (Option) enthält und die Klassen, die Unterklassen zu einer ausgewählten Klasse sowie Benennungen der einzelnen A/V-Angebote der ausgewählten Klasse und Unterklasse angezeigt werden. Sowohl Klasse als auch Option werden als sogenannte Prototypen ausgeführt, d. h. sie können beliebig erweitert werden. Beispiele für Klasse sind "Typ", "Titel" oder "Station". Als Option zur Klasse "Typ" kommen beispielsweise "Action", "Pop", "Klassik", "Nachrichten" usw. in Frage. Die zugehörigen Benennungen sind dann beispielsweise der Name einer Rundfunkstation oder der Titel einer in das CD-Abspielgerät eingelegten CD. Optionen zur Klasse Titel sind beispielsweise auch "CD", "Seite A" oder "Seite B" oder ein Datenträgername. Benennungen hierzu sind insbesondere Titelnamen, beispielsweise von Musiktiteln. Als Optionen zur Klasse "Station" können "Radio" oder "TV" genannt werden, wobei die Benennungen wiederum die einzelnen Stationen bezeichnen.

Über die Bedieneinheit ist eines der bereitgehaltenen A/V-Angebote geräteunabhängig auswählbar. Hat der Benutzer beispielsweise in der Klasse "Typ" und der Option "Pop" einen bestimmten Rundfunksender ausgewählt, so wird dieser Rundfunksender automatisch durch die Steuereinheit abgerufen und über die akustische Ausgabeeinheit ausgegeben, ohne daß der Benutzer das Empfangsgerät kennen oder auswählen muß.

Insbesondere weist das A/V-System mehrere akustische und/oder optische Ausgabeeinheiten für Audio- und/oder Videosignale auf, die über die Bedieneinheit auswählbar sind. Der Bediener kann somit beispielsweise von der Ausgabeeinheit "Lautsprecher" auf die Ausgabeeinheit "Kopfhörer" umschalten. Sind mehrere Bedieneinheiten vorhanden, so können Probleme dadurch auftreten, daß verschieden Benutzer unterschiedliche Ausgabeeinheiten für das gleiche A/V-Angebot oder die gleiche Ausgabeeinheit für unterschiedliche A/V-Angebote wählen. Daher ist insbesondere vorgesehen, daß jeder Bedieneinheit eine Priorität zugeordnet ist. Eine mit einem Bediengerät niedrigerer Priorität vorgenommene Auswahl kann nur durch ein Bediengerät gleicher oder höherer Priorität abgeändert werden. Beispielsweise kann dem Bediengerät für den Fahrer die höchste Priorität und dem Bediengerät für den Beifahrer die zweithöchste Priorität zugeordnet werden, während den Bediengeräten für die Rücksitzpassagiere eine niedrigere Priorität zugeordnet wird. Wählt nun der Fahrer einen Sender für die Wiedergabe von Verkehrsinformationen aus und möchte, daß diese über die Lautsprecher ausgegeben werden, so kann weder vom Beifahrer noch von den Rücksitzpassagieren ein anderes A/V-Angebot auf die Ausgabeeinheit Lautsprecher gelegt werden.

Gleiche A/V-Angebote können über verschiedene A/V-Geräte in dem Gesamtsystem zur Verfügung gestellt werden. Beispielsweise kann der selbe Musiktitel sowohl auf einer eingelegten CD als auch auf einer Audio-Kassette zur Verfügung stehen. Der selbe Rundfunksender kann sowohl über den analogen Rundfunkempfänger oder auch über das digitale DAB-System zur Verfügung stehen. Der Benutzer kann in diesem Fall manuell auswählen, von welchem Gerät das gewählte A/V-Angebot über die Ausgabeeinheit ausgegeben werden soll. In einer besonderen Ausführungsform ist jedoch vorgesehen, daß den A/V-Geräten Prioritäten zugeordnet sind. Wird nun dasselbe A/V-Angebot von mehreren Geräten zur Verfügung gestellt, so wird das A/V-Gerät mit der höchsten Priorität, das das gewählte A/V-Angebot zur Verfügung stellt, mit der Ausgabeeinheit verbunden. So kann beispielsweise wegen der höheren Wiedergabequalität dem DAB-Empfänger eine höhere Priorität zugeordnet werden als dem analogen Rundfunkempfänger oder dem CD-Abspielgerät eine höhere Priorität als dem Kassetten-Abspielgerät.

Weiterhin ist vorgesehen, daß bei einem Wechsel des gewählten A/V-Angebotes der Übergang bei reduzierter Lautstärke erfolgt. Dies ist als "soft mute" bekannt. Hierbei wird nach einer neuen Auswahl zunächst die Lautstärke reduziert, dann erfolgt der Wechsel des auszugebenden Angebots und schließlich wird die Lautstärke wieder auf den ursprünglichen Wert hochgefahren.

Das Netzwerk des erfindungsgemäßen A/V-Systems ist als offenes System ausgelegt, so daß Geräte unterschiedlichster Hersteller integriert werden können. Das System weist hierzu virtuelle Schnittstellen auf, wie beispielsweise die bekannten API.

Das Steuerprogramm weist vorzugsweise mehrere Dienstemodule auf, die in einer plattformunabhängigen Sprache realisiert sind. Besonders bevorzugt wird hierbei die Programmiersprache Java und die auf Java basierende Jini™-Technologie der Firma Sun Microsystems unter Ausnutzung von Objekt-orientierten Programmiermethoden. Java-Programme werden von einem Compiler in einen sogenannten Byte-Code übersetzt, der mit jedem Mikroprozessor mit einem Byte-Code Interpreter ausführbar ist, woraus sich die gewünschte Flexibilität hinsichtlich verschiedener A/V-Geräte ergibt.

Vorzugsweise enthält das Steuerprogramm ein erstes Dienstemodul (Provider Service), das die Auswahl eines geeigneten Audio- oder Videogeräts zur Wiedergabe des gewählten A/V-Angebots sicherstellt.

Weiterhin ist ein zweites Dienstemodul (Terminal Service) zur Auswahl und Verwaltung der Ausgabeeinheiten vorgesehen. Ein drittes Dienstemodul (Network Service) dient zum Verbinden der durch die Auswahl des zweiten und dritten Dienstemoduls, also des Provider Service und des Terminal Service, festgelegten Knotenadressen des Netzwerkes. Weiterhin ist ein viertes Dienstemodul (Rendering Service) vorhanden, das die Funktion der anderen Dienstemodule anfordert. Weiterhin enthält das Steuerprogramm ein Registrierungsmodul zu Registrierung neu angeschlossener A/V-Geräte.

Ein erfindungsgemäßes Verfahren zum Betreiben eines lokalen Multimediasystems mit mehreren verschiedenartigen A/V-Geräten weist die folgenden Verfahrensschritte auf:
- Übertragung von Informationen hinsichtlich der von den A/V-Geräten bereitgehaltenen A/V-Angebote einschließlich einer oder mehrerer Klassifizierungen von den A/V-Geräten zu einer Steuereinheit,
- geräteunabhängiges Aufbereiten der Informationen zu den bereitgehaltenen A/V-Angeboten in Klassen anhand der Klassifizierungen,
- Ausgabe der geräteunabhängig nach Klassen aufbereiteten Infor mationen zu den bereitgehaltenen A/V-Angeboten auf einer optischen Ausgabeeinheit,
- Auswahl eines für die Wiedergabe des über die Bedieneinheit geräteunabhängig ausgewählten A/V-Angebots geeigneten A/V-Geräts,
- Verbinden des ausgewählten A/V-Geräts mit einer Ausgabeeinheit,
- Wiedergabe des ausgewählten A/V-Angebots über die Ausgabeeinheit.

Weitere vorteilhafte Ausgestaltungen des Verfahrens, die teilweise auch bereits in den Ausführungen zum A/V-System oder in der nachfolgenden Beschreibung eines Ausführungsbeispiels aufgeführt sind, sind in den Unteransprüchen angegeben.

Die aufbereiteten Informationen zu den bereitgehaltenen A/V-Angeboten weisen, wie bereits ausgeführt, eine Klasse, eine Unterklasse (Option) sowie eine Benennung auf. In einer speziellen Ausführungsform weist das Steuerprogramm wiederum die zuvor bereits genannten Module auf. Die von einem Benutzer ausgewählte Klasse, Option und Benennung werden dem "Rendering Service" übergeben. Dieser fragt in der Registratur einen Provider (A/V-Gerät) an, der diesen Inhalt wiedergeben kann. Der gefundene Provider liefert die Art des Mediums sowie die Knotenadresse. Mit dieser Information kann ein geeigneter "Terminal Provider" (Ausgabeeinheit) angefragt werden. Der "Network Service" erhält schließlich die Anforderung, die beiden Knotenadressen miteinander zu verbinden.

Die Erfindung wird nachfolgend anhand eines Ausführungsbeispiels und der Zeichnung näher beschrieben. Es zeigen:
- Figur 1:: das A/V-System mit der ringförmigen Netzwerkstruktur
- Figur 2:: die Elemente einer Bedieneinheit mit einer ersten Displaydar stellung einer ersten Klassifizierung
- Figur 3:: eine Ausgabeform einer zweiten Klassifizierung
- Figur 4:: eine Ausgabeform einer dritten Klassifizierung
- Figur 5:: eine zweite geräteunabhängige Ausgabeform
- Figur 6:: eine dritte geräteunabhängige Ausgabeform.

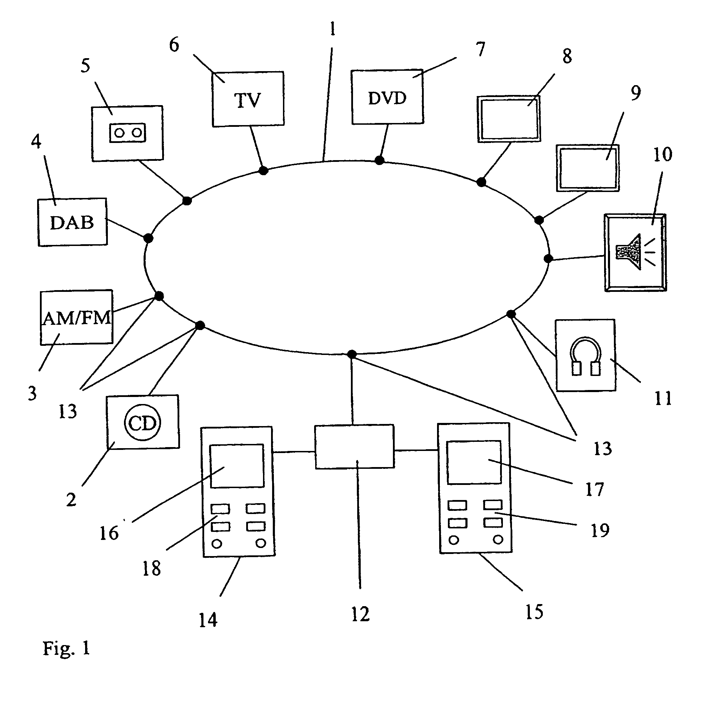

Figur 1 zeigt die Struktur des erfindungsgemäßen A/V-Systems. Über ein ringförmiges optisches Netz 1 sind mehrere verschiedenartige A/V-Geräte 2-7, mehrere Ausgabeeinheiten 8-11 und eine Steuereinheit 12, die an Knoten 13 des optischen Netzes 1 angeschlossen sind, miteinander verbunden. Das optische Netz 1 beinhaltet ein Media-Datennetzwerk, das es erlaubt Datenströme zu routen. Ferner beinhaltet das Netz 1 einen Kontrollbus zum Senden von Kommandos an die Knoten 13 des Netzes 1. Im Ausführungsbeispiel ist das optische Netz 1 in der an sich bekannten MOST-Technologie realisiert. Als A/V-Geräte sind im Ausführungsbeispiel im einzelnen ein CD-Wechsler 2, ein analoger Rundfunkempfänger 3, ein DAB-Empfänger 4 für digitalen Rundfunkempfang, ein Kassetten-Abspielgerät 5, ein TV-Empfänger 6 sowie ein DVD-Abspielgerät 7 vorgesehen. Als Ausgabeeinheiten sind beispielhaft zwei Monitore 8, 9, ein Lautsprechersystem 10 sowie ein Kopfhörer 11 vorgesehen. Mit der Steuereinheit 12 sind zwei Bedieneinheiten 14, 15 verbunden. Die Bedieneinheiten 14, 15 können mit der Steuereinheit 12 über ein Kabel oder auch drahtlos verbunden sein. Im Falle einer drahtlosen Verbindung kann die Datenübertragung insbesondere über eine Infrarotschnittstelle oder über eine Kurzstreckenfunkverbindung, beispielsweise nach dem Bluetooth-Verfahren, erfolgen.

Die A/V-Geräte 2-7 übermitteln über das optische Netz 1 Informationen hinsichtlich der von ihnen bereitgehaltenen Audio- und/oder Videoangebote. Zu diesen Informationen gehört neben einer individuellen Benennung des Angebotes zumindest eine Klassifizierung. Im Falle des CD-Wechslers 2 werden beispielsweise der Titel der eingelegten CD sowie die Titel der einzelnen Musikstücke und eine Klassifizierung dieser Musikstücke wie "Rock", "Pop" oder "Volksmusik" übermittelt. Diese Informationen können auf der CD selbst abgespeichert sein. Es ist jedoch auch möglich die CD über einen Schlüssel (z.B. TotalTrackTime * Tracks) zu identifizieren und die Informationen zur CD aus einer Datenbank zu beziehen

Im Falle des analogen Rundfunkempfängers 3 und des DAB-Empfängers 4 werden die Namen der empfangenen Rundfunkstationen und Kennungen hinsichtlich der von diesen Rundfunkstationen ausgesendeten Programme übermittelt. Bei den Programminhalten kann es sich beispielsweise um die Klassifizierung Nachrichten, Verkehrsmeldungen, Musik usw. handeln. Diese Informationen werden bereits größtenteils über das RDS-Signal von Sendeanlagen zu dem Rundfunkempfängers übermittelt.

Auch von dem TV-Empfänger 6 werden Informationen über die empfangbaren Sender und deren Programminhalte zur Verfügung gestellt. Fernsehprogramme können darüber hinaus zusammen mit Informationen über Programminhalte beispielsweise auch über das Internet bezogen werden.

Das DVD-Abspielgerät 7 stellt beispielsweise den Titel eines auf dem eingelegten Datenträger abgespeicherten Spielfilms und dessen Klassifizierung zur Verfügung. Diese Informationen können ebenfalls auf dem Speichermedium selbst abgespeichert sein oder über eine Datenbank bezogen werden.

In einer Variante des Ausführungsbeispiels können auch Klassifizierungen zu einzelnen Angeboten, wie z.B. Rundfunksendern, in der Steuereinheit abgespeichert sein, so daß die Übertragung der Klassifizierung in diesem Fall entfallen kann. Weiterhin müssen nicht alle angeschlossenen A/V-Geräte detaillierte Informationen zu Klassifizierungen des bereitgehaltenen A/V-Angebots übermitteln. Im Beispiel eines CD-Players kann es auch ausreichend sein nur die Informationen "Titel 1", "Titel 2" usw. als Benennung zu übermitteln.

In der Steuereinheit 12 werden die von den A/V-Geräten 2-7 übermittelten Informationen hinsichtlich der bereitgehaltenen A/V-Angebote weiter aufbereitet. So kann beispielsweise eine Rundfunkstation mehreren Klassen zugeordnet werden. Die klassifizierten A/V-Angebote werden geräteunabhängig auf den Displays 16, 17 angezeigt. Über die Tastaturen 18, 19 kann eines der A/V-Angeboten ausgewählt werden. Zusätzlich kann die Ausgabeeinheit gewählt werden. Diese Informationen werden wiederum an die Steuereinheit 12 übermittelt. Die Steuereinheit 12 wählt daraufhin eines der A/V-Geräte 2-7 aus, das das gewünschte Angebot bereithält. So kann beispielsweise ein gewünschter Radiosender sowohl über den analogen Rundfunkempfänger 3 als auch über den DAB-Empfänger 4 zur Verfügung gestellt werden. Die A/V-Geräte sind mit einer Priorität versehen, so daß bei zur Verfügungstellung des gewünschten Angebots durch mehrere A/V-Geräte 2-7 dasjenige ausgewählt wird, welches die höchste Priorität aufweist. Eine Festlegung solcher Prioritäten ist immer dann sinnvoll, wenn mehrere Geräte ähnliche Angebote zur Verfügung stellen. In der Regel wird das A/V-Gerät, das die höchste Wiedergabequalität erwarten läßt, ausgewählt werden. Das von der Steuereinheit 12 ausgewählte A/V-Gerät wird nun mit der ausgewählten Ausgabeeinheit verbunden. Im Falle einer Audiowiedergabe kann dies beispielsweise der Kopfhörer 11 sein. Das Programm des vom Bediener gewählte Radiosenders wird nunmehr beispielsweise von dem DAB-Empfänger 4 zu dem Kopfhörer 11 übermittelt und über diesen ausgegebein.

Das in der Steuereinheit 12 ablaufende Steuerprogramm ist modular aufgebaut. Das Steuerprogramm enthält ein als Registratur bezeichnetes Modul, bei dem alle verfügbaren Dienste des Systems angemeldet sind. Bei der Registratur werden auch die benötigten Dienste angefordert. Hat der Benutzer ein A/V-Angebot ausgewählt, so werden die Klasse, Option und die Benennung dieses Angebotes dem sogenannten "Rendering Service" übergeben. Der "Rendering Service" fragt in der Registratur einen Provider, also eines der A/V-Geräte 2-7, an, der diesen Inhalt wiedergeben kann. Der gefundene Provider liefert die Art des Mediums sowie die Knotenadresse. Mit dieser Information kann nun ein geeigneter "Terminal Service" angefragt werden, der die Ausgabeeinheit festlegt. Bei mehreren möglichen Ausgabeeinheiten wird die vom Benutzer vorgenommene Wahl unter Beachtung möglicher Prioritäten übernommen. Ein weiteres Modul, nämlich der "Network Service", erhält schließlich die Anforderung, die beiden Knotenadressen des ausgewählten A/V-Gerätes und der ausgewählten Ausgabeeinheit zu verbinden.

Über die Bedieneinheiten 14, 15 werden weiterhin die Informationen Start, Stop und Lautstärke eingegeben und an die entsprechenden Dienste weitergeleitet. Im Ausführungsbeispiel sind zwei Bedieneinheiten 14, 15 vorgesehen. Die Bedieneinheit 14 ist beispielsweise fest im Fahrzeug eingebaut und dem Fahrzeugführer zugeordnet. Bei der Bedieneinheit 15 handelt es sich beispielsweise um eine Fernbedienung, die auch von den Rücksitzpassagieren genutzt werden kann. Die Bedieneinheiten 14, 15 sind mit einer Priorität versehen, wobei die dem Fahrzeugführer zugeordnete Bedieneinheit 14 eine höhere Priorität aufweist als die Bedieneinheit 15. Dies bedeutet, das Anforderungen, die über die Bedieneinheit 14 vorgenommen wurden, durch die Bedieneinheit 15 nicht überschrieben werden können. Durch eine solche hierarchische Anordnung der Bedieneinheiten können Konflikte bei der Auswahl von A/V-Geräten oder Ausgabeeinheiten vermieden werden.

In das beschriebene A/V-System kann weiterhin auch ein Navigationssystem für Kraftfahrzeuge eingebunden werden. Der CD-Wechsler 2 kann daher auch zum Auslesen von Landkartendaten, die auf einer CD gespeichert sind, benutzt werden.

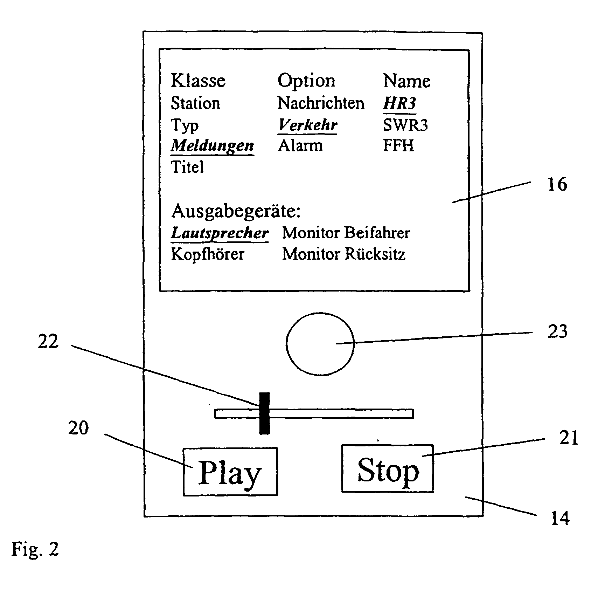

Die A/V-Angebote werden erfindungsgemäß in Klassen eingeteilt und geräteunabhängig zur Auswahl angezeigt. Dies ist aus Figur 2 näher ersichtlich, in der eine Bedieneinheit 14 dargestellt ist. Auf dem Display 16 werden die vorhandenen Klassen "Station", "Typ", "Meldungen" und "Titel" angezeigt. Bei Meldungen handelt es sich beispielsweise um nicht ständig verfügbare Informationen, d. h. solche, die nicht als kontinuierlicher Datenstrom zur Verfügung stehen. Im Beispiel nach Figur 2 wurde die Klasse "Meldungen" ausgewählt. Dies ist in der Darstellung dadurch zu erkennen, daß diese Klasse unterstrichen ist. Bei realen Bedieneinheiten kann die ausgewählte Klasse auf verschiedene Weise gekennzeichnet werden, beispielsweise durch eine andersartige Farbe oder durch eine farbige Hinterlegung oder dergleichen. Weiterhin sind im Display 16 die zu der ausgewählten Klasse "Meldungen" vorhandenen Optionen dargestellt. Im Ausführungsbeispiel sind dies die Optionen "Nachrichten (News)", "Verkehr (Traffic)" und "Alarm". Ausgewählt wurde im dargestellten Ausführungsbeispiel die Option "Verkehr". Mit dieser Option sind Datenquellen bezeichnet, die Informationen zu bestehenden Verkehrsbehinderungen zur Verfügung stellen. In der Spalte unter der Überschrift Name sind nun die zur Option "Verkehr" vorhandenen Datenlieferanten aufgelistet. Im Ausführungsbeispiel sind dies beispielhaft die drei Radiosender HR3, SWR3 und FFH, wobei HR3 ausgewählt wurde. Die Auswahl erfolgt dabei geräteunabhängig, so daß sich der Benutzer keine Gedanken machen muß, über welches der vorhandenen A/V-Geräte der Lieferant von Verkehrsmeldungen HR3 angeboten und empfangen wird.

Weiterhin sind im Display 16 im unteren Bereich die vorhandenen Ausgabegeräte aufgelistet. Im Ausführungsbeispiel handelt es sich um das Lautsprechersystem des Fahrzeugs, einen Kopfhörer, einen Monitor auf der Beifahrerseite sowie einen Monitor bei den Rücksitzen. In der Darstellung nach Figur 2 wurde als Ausgabegerät der Lautsprecher gewählt und damit eine akustische Ausgabequellen.

Durch die Darstellung der A/V-Angebote, geordnet nach Klasse, Option und Name und die Auflistung der vorhandenen Ausgabegeräte wird eine geräteunabhängige Bedienoberfläche geschaffen. Hierdurch ergibt sich eine deutliche Vereinfachung für den Benutzer, der sich nicht mit verschiedenen Bedienkonzepten der einzelnen Geräte auseinandersetzen muß. Die Klassen und Optionen sind hierbei ebensowenig beschränkt wie auch die Art der in dem Gesamtsystem anschließbaren Geräte. Die softwaremäßige Umsetzung des Konzeptes erfolgt über die an sich bekannte plattformunabhängige Programmiersprache Java oder eine andere entsprechend geeignete Programmiersprache bzw. nach der Jini™-Technologie, die auf Java beruht.

Die Bedieneinheit 14 weist neben dem Display 16 Bedienelemente 20 bis 23 auf. Hierbei handelt es sich um ein Bedienelement 20 zum Starten der Wiedergabe und ein Bedienelement 21 zum Beenden der Wiedergabe sowie um ein Bedienelement 22 zum Einstellen der Lautstärke. Über das Bedienelement 23 können die im Display 16 dargestellten Auswahlmöglichkeiten angewählt und ausgewählt werden. Bei dem Bedienelement 23 kann es sich beispielsweise um einen Dreh-/Drücksteller handeln.

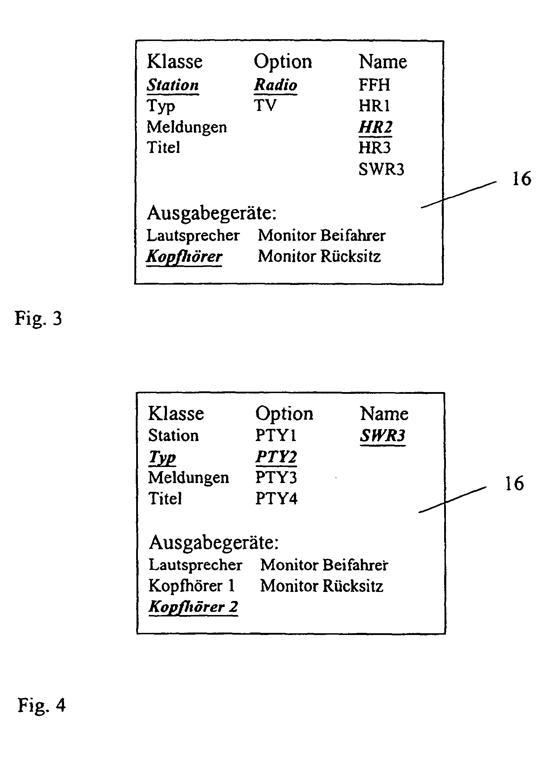

In Figur 3 ist eine weitere Displaydarstellung wiedergegeben. Hierbei wurde die Klasse "Station" ausgewählt. Zu dieser Klasse gehören die beiden Optionen "Radio" und "TV". Zu der hier dargestellten Auswahl "Radio" sind in der Spalte Name wiederum die zur Verfügung stehenden Radiostationen aufgelistet.

In Figur 4 ist eine Darstellung des Display 16 gezeigt, bei der die Klasse "Typ" ausgewählt wurde. Die Klasse "Typ" enthält mehrere Optionen, die als "PTY1" bis "PTY4" bezeichnet sind. Bei dieser abstrakten Zeichnungsweise handelt es sich um die vom RDS-System her bekannten Klassifizierungen von Programminhalten von Radiosendern. Anstelle der Bezeichnung "PTY1" bis "PTY4" ist hier auch eine Klartextanzeige möglich. Die Umsetzung kann in der Steuereinheit erfolgen. Unter Name ist in Figur 4 nun wiederum der Radiosender angezeigt, der die gewünschte Option "PTY2" zur Verfügung stellt. Als Ausgabegerät wurde "Kopfhörer 2" gewählt.

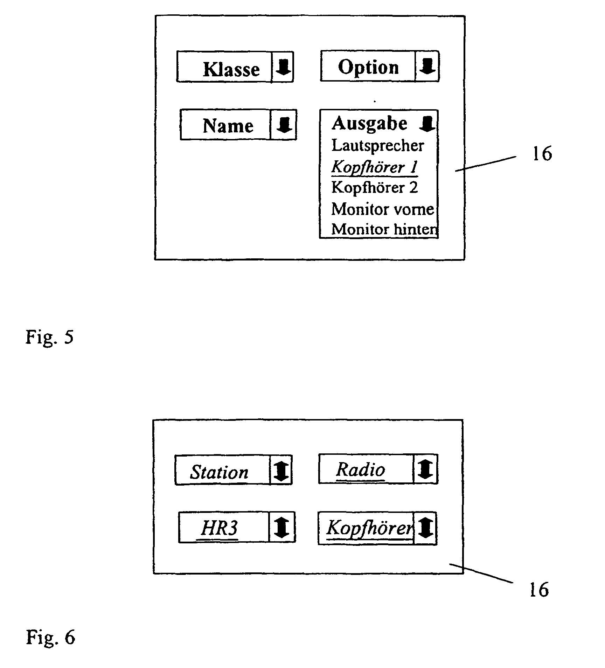

In Figur 5 ist eine weitere Ausgabeform dargestellt, wobei jedem der Felder Klasse, Option, Benennung (Name) und Ausgabeeinheit ein aus PC-Anwendungen bekanntes "pull-down" Menü zugeordnet ist. Durch Anwählen eines dieser Menüs kann es geöffnet werden und die Auswahl kann vorgenommen werden. Im Beispiel ist das Menü für die Ausgabeeinheiten geöffnet.

In Figur 6 ist eine weitere Ausführungsvariante der Ausgabe auf dem Display 16 dargestellt. Wiederum sind den Feldern für Klasse, Option, Benennung (Name) und Ausgabeeinheit Felder zugeordnet, wobei nunmehr jeweils ein Feldelement angezeigt wird. Die Feldelemente können durchlaufen und ausgewählt werden.

Die Erfindung wurde anhand eines Ausführungsbeispiels näher erläutert. Abwandlungen insbesondere hinsichtlich des speziell verwendeten Netzwerkes oder der softwaremäßigen Umsetzung des Steuerprogramms sind dem Fachmann möglich, ohne den erfinderischen Grundgedanken der Erfindung zu verlassen.

## Patentansprüche

1. Audio- und/oder Videosystem mit
- einem lokalen Netzwerk (1), das ein Datennetzwerk und einen Kontrollbus sowie Knoten (13) zur Anbindung von Audio- und/oder Videogeräten (2-7) beinhaltet,
- mehreren verschiedenartigen Audio- und/oder Videogeräten (2-7), die zur Übermittlung von Informationen hinsichtlich der von Ihnen bereitgehaltenen Audio- und/oder Videoangebote über das lokale Netzwerk (1) ausgebildet sind,
- mindestens einer akustischen und/oder optischen Ausgabeeinheit (8-11) für Audio- und/oder Videosignale,
- einer Steuereinheit (12) mit einem Steuerprogramm und einem Speicher,
- einer mit der Steuereinheit (12) verbundenen Bedieneinheit (14, 15) und
- einer optischen Ausgabeeinheit (16, 17),
**dadurch gekennzeichnet daß** in dem Speicher die Informationen hinsichtlich der von den Audio- und/oder Videogeräten (2-7) bereitgehaltenen Audio- und/oder Videoangebote, die von den Geräten (2-7) an die Steuereinheit (12) übermittelt wurden, abgelegt sind, und und daß auf der optischen Ausgebeeinheit (16, 17) die Informationen hinsichtlich der bereitgehaltenen Audio- und/oder Videoangebote geräteunabhängig und in Klassen eingeteilt angezeigt werden.

2. Audio- und/oder Videosystem nach Anspruch 1, **dadurch gekennzeichnet, daß** jede Klasse mindestens eine Unterklasse enthält und die Klassen, die Unterklassen zu einer ausgewählten Klasse sowie Benennungen der einzelnen Audio- und/oder Videoangebote der ausgewählten Klassen und Unterklassen anzeigbar sind.

3. Audio- und/oder Videosystem nach einem der vorhergehenden Ansprüche, **dadurch gekennzeichnet, daß** über die Bedieneinheit (14, 15) eines der bereitgehaltenen Audio- und/oder Videoangebote geräteunabhängig auswählbar und durch die Steuereinheit (12) automatisch abrufbar ist.

4. Audio- und/oder Videosystem nach einem der vorhergehenden Ansprüche, **dadurch gekennzeichnet, daß** mehrere akustische und/oder optische Ausgabeeinheiten (8-11) für Audio- und/oder Videosignale vorhanden sind.

5. Audio- und/oder Videosystem nach einem der vorhergehenden Ansprüche, **dadurch gekennzeichnet, daß** die vorhandenen akustischen und/oder optischen Ausgabeeinheiten (8-11) für Audio- und/oder Videosignale über die Bedieneinheit (14, 15) auswählbar sind.

6. Audio- und/oder Videosystem nach einem der vorhergehenden Ansprüche, **dadurch gekennzeichnet, daß** mehrere Bedieneinheiten (14, 15) vorhanden sind.

7. Audio- und/oder Videosystem nach Anspruch 6, **dadurch gekennzeichnet, daß** jeder Bedieneinheit (14, 15) eine Priorität zugeordnet ist.

8. Audio- und/oder Videosystem nach Anspruch 7, **dadurch gekennzeichnet, daß** eine mit einer Bedieneinheit niedrigerer Priorität vorgenommene Auswahl nur durch eine Bedieneinheit gleicher oder höherer Priorität abgeändert werden kann.

9. Audio- und/oder Videosystem nach einem der vorhergehenden Ansprüche, **dadurch gekennzeichnet, daß** den Audio- und/oder Videogeräten (2-7) Prioritäten zugeordnet sind.

10. Audio- und/oder Videosystem nach Anspruch 9, **dadurch gekennzeichnet, daß** das gewählte Informations- und/oder Unterhaltungsangebot zur Verfügung stellende Gerät mit der höchsten Priorität mit einer Ausgabeeinheit (8-11) verbunden wird.

11. Audio- und/oder Videosystem nach einem der vorhergehenden Ansprüche, **dadurch gekennzeichnet, daß** bei einem Wechsel des gewählten Informations- und/oder Unterhaltungsangebots der Übergang bei reduzierter Lautstärke erfolgt (soft mute).

12. Audio- und/oder Videosystem nach einem der vorhergehenden Ansprüche, **dadurch gekennzeichnet, daß** über die Bedieneinheit (14, 15) die drei Grundfunktionen Start, Stop und Lautstärkeänderung zur Verfügung stehen.

13. Audio- und/oder Videosystem nach einem der vorhergehenden Ansprüche, **dadurch gekennzeichnet, daß** es sich um ein ringförmiges, insbesondere optisches Netz handelt.

14. Audio- und/oder Videosystem nach einem der vorhergehenden Ansprüche, **dadurch gekennzeichnet, daß** es sich um ein Audio- und/oder Videosystem eines Kraftfahrzeugs handelt.

15. Audio- und/oder Videosystem nach Anspruch 14, **dadurch gekennzeichnet, daß** es mit einem Navigationssystem verbunden ist und eines der Audio- und/oder Videogeräte auch zum Auslesen von Landkartendaten geeignet ist.

16. Audio- und/oder Videosystem nach einem der vorhergehenden Ansprüche 1 bis 13, **dadurch gekennzeichnet, daß** es sich um eine Multimedia-Heimanlage handelt.

17. Audio- und/oder Videosystem nach einem der vorhergehenden Ansprüche, **dadurch gekennzeichnet, daß** eine Klassifikation für Radio- oder TV-Stationen zur Verfügung steht.

18. Audio- und/oder Videosystem nach einem der vorhergehenden Ansprüche, **dadurch gekennzeichnet, daß** eine Klassifikation zur Verfügung steht, die den Typ bereitgehaltener Audio- und/oder Videoangebote kennzeichnet.

19. Audio- und/oder Videosystem nach einem der vorhergehenden Ansprüche, **dadurch gekennzeichnet, daß** eine Klassifikation für Musiktitel vorhanden ist.

20. Audio- und/oder Videosystem nach einem der vorhergehenden Ansprüche, **dadurch gekennzeichnet, daß** eine Klassifikation für nicht ständig verfügbare Informationen vorhanden ist.

21. Audio- und/oder Videosystem nach einem der vorhergehenden Ansprüche, **dadurch gekennzeichnet, daß** ein bereitgehaltenes Audio- und/oder Videoangebot mehreren Klassifikationen zugeordnet ist.

22. Audio- und/oder Videosystem nach einem der vorhergehenden Ansprüche, **dadurch gekennzeichnet, daß** das Netzwerk (1) als offenes System ausgelegt ist.

23. Audio- und/oder Videosystem nach einem der vorhergehenden Ansprüche, **dadurch gekennzeichnet, daß** virtuelle Schnittstellen vorhanden sind.

24. Audio- und/oder Videosystem nach einem der vorhergehenden Ansprüche, **dadurch gekennzeichnet, daß** das Steuerprogramm mehrere Dienstemodule enthält.

25. Audio- und/oder Videosystem nach einem der vorhergehenden Ansprüche, **dadurch gekennzeichnet, daß** das Steuerprogramm enthält
- ein erstes Dienstemodul (Provider Service), das die Auswahl eines geeigneten Audio- oder Videogeräts zur Wiedergabe des gewählten Audio- oder Videoangebots sicherstellt.
- ein zweites Dienstemodul (Terminal Service) zur Auswahl und Verwaltung der Ausgabeeinheiten,
- ein drittes Dienstemodul (Network Service) zum Verbinden der durch die Auswahl des zweiten und dritten Dienstemoduls festgelegten Knotenadressen des Netzwerks und
- ein viertes Dienstemodul (Rendering Service), das die Funktionen anderer Dienstemodule anfordert.

26. Audio- und/oder Videosystem nach einem der vorhergehenden Ansprüche, **dadurch gekennzeichnet, daß** das Steuerprogramm ein Registrierungsmodul zur Registrierung neu angeschlossener Audio- und/oder Videogeräte enthält.

27. Verfahren zum Betreiben eines lokalen Multimediasystems mit mehreren verschiedenartigen Audio- und/oder Videogeräten (2-7) mit den Verfahrensschritten:
- Übertragung von Informationen hinsichtlich der von den Audio- und/oder Videogeräten (2-7) bereitgehaltenen Audio- und/oder Videoangebote einschließlich einer oder mehrerer Klassifizierungen von den Audio- und/oder Videogeräten (2-7) zu einer Steuereinheit (12),
- geräteunabhängiges Aufbereiten der Informationen zu den bereitgehaltenen Audio- und/oder Videoangeboten in Klassen anhand der Klassifizierungen,
- Ausgabe der geräteunabhängig nach Klassen aufbereiteten Informationen zu den bereitgehaltenen Audio- und/oder Videoangeboten auf einer optischen Ausgabeeinheit (16, 17),
- Auswahl eines für die Wiedergabe des über eine Bedieneinheit (14, 15) geräteunabhängig ausgewählten Audio- und/oder Videoangebots geeigneten Audio- und/oder Videogeräts,
- Verbinden des ausgewählten Audio- und/oder Videogeräts mit einer Ausgabeeinheit,
- Wiedergabe des ausgewählten Audio- und/oder Videoangebots über die Ausgabeeinheit.

28. Verfahren nach Anspruch 27, **dadurch gekennzeichnet, daß** von den Audio- und/oder Videogeräten (2-7) als Information zu dem bereitgehaltenen Audio- und/oder Videoangebot eine Klassifizierung, eine Unterklassifizierung sowie eine Benennung übertragen werden.

29. Verfahren nach einem der vorhergehenden Ansprüche 27 oder 28, **dadurch gekennzeichnet, daß** mehrere akustische oder optische Ausgabeeinheiten (8-11) vorhanden sind und eine über die Bedieneinheit (14, 15) ausgewählte Ausgabeeinheit mit dem von der Steuereinheit (12) ausgewählten Audio- und/oder Videogerät verbunden wird.

30. Verfahren nach einem der vorhergehenden Ansprüche 27 bis 29, **dadurch gekennzeichnet, daß** den Bedieneinheiten (14, 15) Prioritäten zugeordnet sind und eine mit einer ersten Bedieneinheit mit einer ersten Priorität vorgenommene Auswahl nur dann abgeändert wird, wenn sie über eine Bedieneinheit gleicher oder höherer Priorität vor genommen wird.

31. Verfahren nach einem der vorhergehenden Ansprüche 27 bis 30, **dadurch gekennzeichnet, daß** den Audio- und/oder Videogeräten (2-7) Prioritäten zugeordnet sind und von der Steuereinheit (12) das das gewählte Informations- und/oder Unterhaltungsangebot zur Verfügung stellende Gerät mit der höchsten Priorität mit einer Ausgabeeinheit (8-11) verbunden wird.

32. Verfahren nach einem der vorhergehenden Ansprüche 27 bis 31, **dadurch gekennzeichnet, daß** bei einem Wechsel des gewählten Informations- oder Unterhaltungsangebots über die Bedieneinheit
- von der Steuereinheit (12) das für die Wiedergabe des neu gewählte Informations- und/oder Unterhaltungsangebot geeignete Audio- und/oder Videogerät ausgewählt,
- die Lautstärke der akustischen Ausgabeeinheit reduziert wird,
- das neu ausgewählte Audio- und/oder Videogerät mit der akustischen Ausgabeeinheit verbunden und
- das neu gewählte Audio- und/oder Videoangebot über die akustische Ausgabeeinheit ausgegeben sowie
- anschließend die Lautstärke wieder erhöht wird.

33. Verfahren nach einem der vorhergehenden Ansprüche 27 bis 32, **dadurch gekennzeichnet, daß** die Übertragung in dem lokalen Netz optisch erfolgt.

34. Verfahren nach einem der vorhergehenden Ansprüche 27 bis 33, **dadurch gekennzeichnet, daß** mindestens eine Klassifizierung für Radio- bzw. TV-Stationen, den Typ des bereitgehaltenen Audio- und/oder Videoangebots, Musiktitel oder nicht ständig verfügbare Informationen vorhanden ist.

35. Verfahren nach einem der vorhergehenden Ansprüche 27 bis 34, **dadurch gekennzeichnet, daß** die Information zu einem bereitgehaltenen Audio- und/oder Videoangebot mehr als eine Klassifizierung enthält und das Angebot von der Steuereinheit entsprechend den Klassifizierungen mehr als einer Klasse zugeordnet wird.

36. Verfahren nach einem der vorhergehenden Ansprüche 27 bis 35, **dadurch gekennzeichnet, daß** die Zahl der Klassen erweiterbar ist.

37. Verfahren nach einem der vorhergehenden Ansprüche 27 bis 36, **dadurch gekennzeichnet, daß** die Verbindung zwischen den Geräten und der Steuereinheit über virtuelle Schnittstellen erfolgt.

38. Verfahren nach einem der vorhergehenden Ansprüche 27 bis 37, **dadurch gekennzeichnet, daß** die Steuereinheit ein Steuerprogramm mit mehreren Dienstemodulen enthält.

39. Verfahren nach einem der vorhergehenden Ansprüche 27 bis 38, **dadurch gekennzeichnet, daß** die Auswahl eines geeigneten Audio- und/oder Videogeräts zur Wiedergabe eines gewählten Audio- und/oder Videoangebots durch ein erstes Dienstemodul erfolgt.

40. Verfahren nach einem der vorhergehenden Ansprüche 27 bis 39, **dadurch gekennzeichnet, daß** die Auswahl und Verwaltung der Ausgabeeinheiten durch ein zweites Dienstemodul erfolgt.

41. Verfahren nach Anspruch 40, **dadurch gekennzeichnet, daß** das Verbinden des durch das erste Dienstemodul ausgewählten Audio- und/oder Videogeräts mit der durch das zweite Dienstemodul ausgewählten Ausgabeeinheit durch ein drittes Dienstemodul (Network Service) erfolgt.

42. Verfahren nach einem der vorhergehenden Ansprüche 39 bis 41, **dadurch gekennzeichnet, daß** die Anforderung eines Dienstes über ein viertes Dienstemodul erfolgt.

43. Verfahren nach einem der vorhergehenden Ansprüche 27 bis 42, **dadurch gekennzeichnet, daß** neu in das Multimediasystem eingebrachte Audio- und/oder Videosysteme automatisch von einem Registrierungsmodul registriert werden.

## Claims

1. Audio and/or video system having
- a local area network (1) containing a data network and a control bus and also nodes (13) for connecting audio and/or video appliances (2-7),
- a plurality of assorted audio and/or video appliances (2-7) designed for transmitting information about their available audio and/or video presentations via the local area network (1),
- at least one audio and/or visual output unit (8-11) for audio and/or video signals,
- a control unit (12) having a control program and a memory,
- an operating unit (14, 15) connected to the control unit (12), and
- a visual output unit (16, 17), **characterized in that** the memory stores the information about the audio and/or video appliances (2-7) available audio and/or video presentations which has been transmitted to the control unit (12) from the appliances (2-7), and
and **in that** the visual output unit (16, 17) displays the information about the available audio and/or video presentations independently of the appliances and divided into classes.

2. Audio and/or video system according to Claim 1, **characterized in that** each class contains at least one subclass and it is possible to display the classes, the subclasses for a selected class and names for the individual audio and/or video presentations in the selected classes and subclasses.

3. Audio and/or video system according to one of the preceding claims, **characterized in that** the operating unit (14, 15) can be used to select one of the available audio and/or video presentations independently of the appliances and to retrieve it automatically using the control unit (12).

4. Audio and/or video system according to one of the preceding claims, **characterized in that** there are a plurality of audio and/or visual output units (8-11) for audio and/or video signals.

5. Audio and/or video system according to one of the preceding claims, **characterized in that** the available audio and/or visual output units (8-11) can be selected for audio and/or video signals using the operating unit (14, 15).

6. Audio and/or video system according to one of the preceding claims, **characterized in that** there are a plurality of operating units (14, 15).

7. Audio and/or video system according to Claim 6, **characterized in that** each operating unit (14, 15) is allocated a priority.

8. Audio and/or video system according to Claim 7, **characterized in that** a selection made using an operating unit having relatively low priority can be modified only by an operating unit having the same or higher priority.

9. Audio and/or video system according to one of the preceding claims, **characterized in that** the audio and/or video appliances (2-7) are allocated priorities.

10. Audio and/or video system according to Claim 9, **characterized in that** that appliance providing the chosen information and/or entertainment presentation which has the highest priority is connected to an output unit (8-11).

11. Audio and/or video system according to one of the preceding claims, **characterized in that**, when the chosen information and/or entertainment presentation is changed, the transition is made at reduced volume (soft mute).

12. Audio and/or video system according to one of the preceding claims, **characterized in that** the operating unit (14, 15) is used to provide the three basic functions Start, Stop and Change volume.

13. Audio and/or video system according to one of the preceding claims, **characterized in that** it is a ring, in particular optical, network.

14. Audio and/or video system according to one of the preceding claims, **characterized in that** it is an audio and/or video system in a motor vehicle.

15. Audio and/or video system according to Claim 14, **characterized in that** it is connected to a navigation system and one of the audio and/or video appliances is also suitable for reading map data.

16. Audio and/or video system according to one of the preceding Claims 1 to 13, **characterized in that** it is a home multimedia system.

17. Audio and/or video system according to one of the preceding claims, **characterized in that** a classification is available for radio or TV stations.

18. Audio and/or video system according to one of the preceding claims, **characterized in that** a classification is available which identifies the type of audio and/or video presentations available.

19. Audio and/or video system according to one of the preceding claims, **characterized in that** there is a classification for music titles.

20. Audio and/or video system according to one of the preceding claims, **characterized in that** there is a classification for information which is not continuously available.

21. Audio and/or video system according to one of the preceding claims, **characterized in that** an available audio and/or video presentation is allocated to a plurality of classifications.

22. Audio and/or video system according to one of the preceding claims, **characterized in that** the network (1) is in the form of an open system.

23. Audio and/or video system according to one of the preceding claims, **characterized in that** there are virtual interfaces.

24. Audio and/or video system according to one of the preceding claims, **characterized in that** the control program contains a plurality of service modules.

25. Audio and/or video system according to one of the preceding claims, **characterized in that** the control program contains
- a first service module (Provider Service), which ensures the selection of a suitable audio or video appliance for playing back the chosen audio or video presentation,
- a second service module (Terminal Service) for selecting and managing the output units,
- a third service module (Network Service) for connecting the network's node addresses stipulated by the selection of the second and third service modules, and
- a fourth service module (Rendering Service), which requests the functions of other service modules.

26. Audio and/or video system according to one of the preceding claims, **characterized in that** the control program contains a registration module for registering newly connected audio and/or video appliances.

27. Method for operating a local multimedia system having a plurality of assorted audio and/or video appliances (2-7), having the following method steps:
- information about the audio and/or video appliances' (2-7) available audio and/or video presentations, including one or more classifications, is transmitted from the audio and/or video appliances (2-7) to a control unit (12),
- the information about the available audio and/or video presentations is processed, independently of the appliances, into classes using the classifications,
- the information about the available audio and/or video presentations which has been processed into classes independently of the appliances is output on a visual output unit (16, 17),
- an audio and/or video appliance which is suitable for playing back the audio and/or video presentation selected independently of the appliances using an operating unit (14, 15) is selected,
- the selected audio and/or video appliance is connected to an output unit,
- the selected audio and/or video presentation is played back via the output unit.

28. Method according to Claim 27, **characterized in that** a classification, a subclassification and also a name are transmitted by the audio and/or video appliances (2-7) as information about the available audio and/or video presentation.

29. Method according to one of the preceding Claims 27 and 28, **characterized in that** there are a plurality of audio or visual output units (8-11), and an output unit selected using the operating unit (14, 15) is connected to the audio and/or video appliance selected by the control unit (12).

30. Method according to one of the preceding Claims 27 to 29, **characterized in that** the operating units (14, 15) are allocated priorities, and a selection made using a first operating unit with a first priority is modified only if it is done using an operating unit with the same or higher priority.

31. Method according to one of the preceding Claims 27 to 30, **characterized in that** the audio and/or video appliances (2-7) are allocated priorities, and the control unit (12) connects that appliance providing the chosen information and/or entertainment presentation which has the highest priority to an output unit (8-11).

32. Method according to one of the preceding Claims 27 to 31, **characterized in that**, when the chosen information or entertainment presentation is changed using the operating unit,
- the control unit (12) selects the audio and/or video appliance which is suitable for playing back the newly chosen information and/or entertainment presentation,
- the volume of the audio output unit is reduced,
- the newly selected audio and/or video appliance is connected to the audio output unit, and
- the newly chosen audio and/or video presentation is output via the audio output unit, and also
- the volume is then increased again.

33. Method according to one of the preceding Claims 27 to 32, **characterized in that** the transmission in the local area network takes place on an optical basis.

34. Method according to one of the preceding Claims 27 to 33, **characterized in that** there is at least one classification for radio and TV stations, the type of audio and/or video presentation available, music titles or information which is not continuously available.

35. Method according to one of the preceding Claims 27 to 34, **characterized in that** the information about an available audio and/or video presentation contains more than one classification, and the control unit allocates the presentation to more than one class on the basis of the classifications.

36. Method according to one of the preceding Claims 27 to 35, **characterized in that** the number of classes can be extended.

37. Method according to one of the preceding Claims 27 to 36, **characterized in that** the appliances and the control unit are connected by means of virtual interfaces.

38. Method according to one of the preceding Claims 27 to 37, **characterized in that** the control unit contains a control program having a plurality of service modules.

39. Method according to one of the preceding Claims 27 to 38, **characterized in that** a suitable audio and/or video appliance for playing back a chosen audio and/or video presentation is selected by a first service module.

40. Method according to one of the preceding Claims 27 to 39, **characterized in that** the output units are selected and managed by a second service module.

41. Method according to Claim 40, **characterized in that** the audio and/or video appliance selected by the first service module and the output unit selected by the second service module are connected by a third service module (Network Service).

42. Method according to one of the preceding Claims 39 to 41, **characterized in that** a service is requested by means of a fourth service module.

43. Method according to one of the preceding Claims 27 to 42, **characterized in that** the audio and/or video systems newly introduced into the multimedia system are automatically registered by a registration module.

## Revendications

1. Système audio et/ou vidéo comportant
- un réseau local (1) comprenant un réseau de données et un bus de contrôle, ainsi que des noeuds (13) permettant l'intégration d'appareils audio et/ou vidéo (2 - 7),
- plusieurs appareils audio et/ou vidéo de genres différents (2 - 7), qui sont conçus en vue de la transmission, à travers le réseau local (1), d'informations concernant les offres audio et/ou vidéo qu'ils tiennent à disposition,
- au moins une unité d'édition acoustique et/ou optique (8-11) pour des signaux audio et/ou vidéo,
- une unité de contrôle (12) avec un programme de contrôle et une mémoire, une unité de commande (14, 15) reliée à l'unité de contrôle (12) et une unité optique d'édition (16, 17)
**caractérisé par le fait que**, dans la mémoire, sont stockées les informations, qui concernent les offres audio et/ou vidéo tenues à disposition par les appareils audio et/ou vidéo (2 - 7) et qui sont transmises par les appareils (2 - 7) à l'unité de contrôle (12), et que, sur l'unité optique d'édition (16, 17), sont affichées, indépendamment des appareils et réparties en classes, les informations concernant les offres audio et/ou vidéo tenues à disposition.

2. Système audio et/ou vidéo selon la revendication 1 **caractérisé par le fait que** chaque classe comprend au moins une sous-classe et que les classes et les sous-classes faisant partie d'une classe sélectionnée, ainsi que les désignations des diverses offres audio et/ou vidéo des classes et sous-classes sélectionnées, peuvent être affichées.

3. Système audio et/ou vidéo selon l'une des revendications précédentes **caractérisé par le fait qu'**il est possible, par l'intermédiaire de l'unité de commande (14, 15), de sélectionner indépendamment des appareils l'une des offres audio et/ou vidéo tenues à disposition et de l'appeler automatiquement par l'unité de contrôle (12).

4. Système audio et/ou vidéo selon l'une des revendications précédentes **caractérisé par le fait qu'**il existe plusieurs unités optiques et/ou acoustiques d'édition (8-11) pour des signaux audio et/ou vidéo.

5. Système audio et/ou vidéo selon l'une des revendications précédentes **caractérisé par le fait que** les unités optiques et/ou acoustiques d'édition (8 - 11) disponibles pour des signaux audio et/ou vidéo peuvent être sélectionnées par l'intermédiaire de l'unité de commande (14, 15).

6. Système audio et/ou vidéo selon l'une des revendications précédentes **caractérisé par le fait qu'**il existe plusieurs unités de commande (14, 15).

7. Système audio et/ou vidéo selon la revendication 6 **caractérisé par le fait qu'**une priorité est affectée à chaque unité de commande (14, 15).

8. Système audio et/ou vidéo selon la revendication 7 **caractérisé par le fait qu'**une sélection effectuée avec une unité de commande de priorité inférieure ne peut être modifiée que par une unité de commande de même priorité ou de priorité supérieure.

9. Système audio et/ou vidéo selon l'une des revendications précédentes **caractérisé par le fait que** des priorités sont affectées aux appareils audio et/ou vidéo (2 - 7).

10. Système audio et/ou vidéo selon la revendication 9 **caractérisé par le fait que** l'appareil, mettant à disposition l'offre d'information et/ou de divertissement sélectionnée et qui a la priorité la plus élevée, est connecté à une unité d'édition (8-11).

11. Système audio et/ou vidéo selon l'une des revendications précédentes **caractérisé par le fait que**, lors d'un changement de l'offre d'information et/ou de divertissement sélectionnée, la transition se fait a vec u ne intensité sonore réduite (soft mute).

12. Système audio et/ou vidéo selon l'une des revendications précédentes **caractérisé par le fait que**, par l'intermédiaire de l'unité de commande (14, 15), les trois fonctions de base Marche ou Start, Arrêt ou Stop et Modification du volume sonore sont disponibles.

13. Système audio et/ou vidéo selon l'une des revendications précédentes **caractérisé par le fait qu'**il s'agit d'un réseau en anneau, notamment, d'un réseau optique en anneau.

14. Système audio et/ou vidéo selon l'une des revendications précédentes **caractérisé par le fait qu'**il s'agit du système audio et/ou vidéo d'un véhicule automobile.

15. Système audio et/ou vidéo selon la revendication 14 **caractérisé par le fait qu'**il est relié à un système de navigation et que l'un des appareils audio et/ou vidéo est également approprié à la lecture de données de cartes routières.

16. Système audio et/ou vidéo selon l'une des revendications précédentes 1 à 13 **caractérisé par le fait qu'**il s'agit d'une installation multimédia domestique.

17. Système audio et/ou vidéo selon l'une des revendications précédentes **caractérisé par le fait qu'**une classification est disponible pour les chaînes de radiodiffusion ou de télévision.

18. Système audio et/ou vidéo selon l'une des revendications précédentes **caractérisé par le fait qu'**une classification caractérisant le genre des offres audio et/ou vidéo tenues à disposition est disponible.

19. Système audio et/ou vidéo selon l'une des revendications précédentes **caractérisé par le fait qu'**il y a une classification pour les titres des morceaux de musique.

20. Système audio et/ou vidéo selon l'une des revendications précédentes **caractérisé par le fait qu'**il y a une classification pour des informations qui ne sont pas disponibles en permanence.

21. Système audio et/ou vidéo selon l'une des revendications précédentes **caractérisé par le fait qu'**une offre audio et/ou vidéo tenue à disposition peut être affectée à plusieurs classifications.

22. Système audio et/ou vidéo selon l'une des revendications précédentes **caractérisé par le fait que** le réseau (1) est dimensionné comme système ouvert.

23. Système audio et/ou vidéo selon l'une des revendications précédentes **caractérisé par le fait qu'**il y a des interfaces virtuelles.

24. Système audio et/ou vidéo selon l'une des revendications précédentes **caractérisé par le fait que** le programme de contrôle renferme plusieurs modules de service.

25. Système audio et/ou vidéo selon l'une des revendications précédentes **caractérisé par le fait que** le programme de contrôle renferme
- un premier module de services (Provider Service ), qui assure la sélection d'un appareil audio et/ou vidéo approprié pour la reproduction de l'offre audio et/ou vidéo,
- un deuxième module de services (Terminal Service) permettant de sélectionner et de gérer les unités d'édition,
- un troisième module de services (Network Service) permettant de raccorder les adresses des noeuds du réseau fixées par la sélection du deuxième et du troisième module de services et
- un quatrième module de services (Rendering Service) qui sollicite les fonctions des autres modules de services.

26. Système audio et/ou vidéo selon l'une des revendications précédentes **caractérisé par le fait que** le programme de contrôle renferme un module d'enregistrement permettant l'enregistrement d'appareils audio et/ou vidéo nouvellement raccordés.

27. Procédé permettant d'exploiter un système multimédia local comportant plusieurs appareils audio et/ou vidéo de genres différents (2 - 7) et exécutant les étapes suivantes:
- transmission vers une unité de contrôle (12) d'informations concernant les offres audio et/ou vidéo tenues à disposition par les appareils audio et/ou vidéo (2 - 7), y compris une ou plusieurs classifications des appareils audio et/ou vidéo (2 - 7),
- préparation en classes à l'aide des classifications, indépendamment des appareils, des informations relatives aux offres audio et/ou vidéo tenues à disposition,
- édition sur une unité optique d'édition (16, 17) des informations préparées en classes, indépendamment des appareils, relatives aux offres audio et/ou vidéo tenues à disposition,
- sélection d'un appareil audio et/ou vidéo approprié pour la reproduction de l'offre audio et/ou vidéo sélectionnée indépendamment de l'appareil par l'intermédiaire d'une unité de commande (14, 15),
- raccordement à une unité d'édition de l'appareil audio et/ou vidéo sélectionné,
- reproduction par l'intermédiaire de l'unité d'édition de l'offre audio et/ou vidéo sélectionnée.

28. Procédé selon la revendication 27 **caractérisé par le fait que** les appareils audio et/ou vidéo (2 -7) transmettent, en tant qu'information concernant l'offre audio et/ou vidéo tenue à disposition, une classification, une sous-classification, ainsi qu'une désignation.

29. Procédé selon l'une des revendications précédentes 27 ou 28 **caractérisé par le fait qu'**il y a plusieurs unités acoustiques ou optiques d'édition (8 - 11) et qu'une unité d'édition sélectionnée par l'intermédiaire de l'unité de commande (14, 15) est reliée à l'appareil audio et/ou vidéo sélectionné par l'unité de contrôle (12).

30. Procédé selon l'une des revendications précédentes 27 à 29 **caractérisé par le fait que** des priorités sont affectées aux unités de commande (14, 15) et qu'une sélection effectuée avec une première unité de commande ayant une première priorité ne peut être modifiée que par l'intermédiaire d'une unité de commande ayant la même priorité ou une priorité supérieure.

31. Procédé selon l'une des revendications précédentes 27 à 30 **caractérisé par le fait que** des priorités sont affectées aux appareils audio et/ou vidéo (2 - 7) et que l'unité de contrôle (12) relie l'appareil mettant à disposition l'offre choisie d'information et/ou de divertissement à une unité d'édition (8 - 11).

32. Procédé selon l'une des revendications précédentes 27 à 31 **caractérisé par le fait que**, lors d'un changement de l'offre d'information et/ou de divertissement choisie par l'intermédiaire de l'unité de commande,
- l'unité de contrôle (12) sélectionne l'appareil audio et/ou vidéo approprié pour la reproduction de l'offre d'information et/ou de divertissement nouvellement choisie,
- l'intensité sonore de l'unité acoustique d'édition est diminuée,
- l'appareil audio et / ou vidéo nouvellement sélectionné est relié à l'unité acoustique d'édition et
- l'offre audio et/ou vidéo nouvellement sélectionnée est éditée par l'intermédiaire de l'unité acoustique d'édition, ainsi que,
- ensuite, l'intensité sonore est, de nouveau, augmentée.

33. Procédé selon l'une des revendications précédentes 27 à 32 **caractérisé par le fait que** la transmission dans le réseau locale est une transmission optique.

34. Procédé selon l'une des revendications précédentes 27 à 33 **caractérisé par le fait qu'**il y a, au moins, une classification pour les chaînes de radiodiffusion et, respectivement, de télévision, pour le genre de l'offre audio et/ou vidéo tenue à disposition, pour les titres des morceaux de musique ou pour les informations qui ne sont pas disponibles en permanence.

35. Procédé selon l'une des revendications précédentes 27 à 34 **caractérisé par le fait que** l'information concernant une offre audio et/ou vidéo tenue à disposition comprend plus d'une classification et que l'unité de contrôle affecte, en fonction des classifications, l'offre à plus d'une classe.

36. Procédé selon l'une des revendications précédentes 27 à 35 **caractérisé par le fait que** le nombre de classes peut être augmenté.

37. Procédé selon l'une des revendications précédentes 27 à 36 **caractérisé par le fait que** la liaison entre les appareils et l'unité de contrôle est réalisée par l'intermédiaire d'interfaces virtuelles.

38. Procédé selon l'une des revendications précédentes 27 à 37 **caractérisé par le fait que** l'unité de contrôle renferme un programme de contrôle ayant plusieurs modules de services.

39. Procédé selon l'une des revendications précédentes 27 à 38 **caractérisé par le fait que** la sélection d'un appareil audio et/ou vidéo approprié pour la reproduction d'une offre audio et/ou vidéo sélectionnée est effectuée par un premier module de services.

40. Procédé selon l'une des revendications précédentes 27 à 39 **caractérisé par le fait que** la sélection et la gestion des unités d'édition sont effectuées par un deuxième module de services.

41. Procédé selon la revendication 40 **caractérisé par le fait que** la connection de l'appareil audio et/ou vidéo sélectionné par le premier module de services avec l'unité d'édition sélectionnée par le deuxième module de services est effectuée par un troisième module de services (Network Service).

42. Procédé selon l'une des revendications précédentes 27 à 41 **caractérisé par le fait que** la sollicitation d'un service est effectuée par l'intermédiaire d'un quatrième module de services.

43. Procédé selon l'une des revendications précédentes 27 à 42 **caractérisé par le fait que** des systèmes audio et/ou vidéo nouvellement introduits dans le système multimédia sont automatiquement enregistrés par un module d'enregistrement.
